(19) Europäisches Patentamt
European Patent Office
Office européen des brevets

(11) EP 4 462 450 A1

(12) **EUROPEAN PATENT APPLICATION**
published in accordance with Art. 153(4) EPC

(43) Date of publication:
**13.11.2024 Bulletin 2024/46**

(21) Application number: **22939590.0**

(22) Date of filing: **23.06.2022**

(51) International Patent Classification (IPC):
***H01B 7/02*** *(2006.01)* ***H01B 13/14*** *(2006.01)*
***H01B 13/00*** *(2006.01)* ***C09D 5/00*** *(2006.01)*
***C09D 177/00*** *(2006.01)* ***C08J 9/26*** *(2006.01)*
***C08J 9/28*** *(2006.01)*

(52) Cooperative Patent Classification (CPC):
Y02A 30/00

(86) International application number:
**PCT/CN2022/100651**

(87) International publication number:
**WO 2023/206760 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2022 CN 202210435011**

(71) Applicant: **SUMII Technology (Shenzhen) Co., Ltd**
**Shenzhen, Guangdong 518000 (CN)**

(72) Inventors:
- **YIN, Yong**
**Shenzhen, Guangdong 518000 (CN)**
- **GAO, Xiang**
**Shenzhen, Guangdong 518000 (CN)**

(74) Representative: **Chung, Hoi Kan**
**Mandarin IP Limited**
**7 Cherry Trees**
**Great Shelford**
**Cambridge CB22 5XA (GB)**

# (54) INSULATING VARNISH AND INSULATED WIRE

(57) The present invention discloses an insulating varnish and an insulated wire. The insulating varnish includes a base varnish and an ester compound represented by a chemical formula I as a phase separating agent;

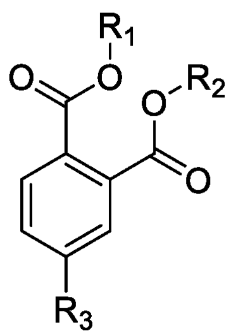

Formula I

wherein $R_1$ and $R_2$ are selected from CmHn, m is selected from any natural number of 1-9, and n is selected from any natural number of 3-19; $R_3$ is selected from one of H, $R_1OCO$, and $R_2OCO$; and $R_1$ and $R_2$ may be the same or different.



Processed by Luminess, 75001 PARIS (FR)

## Description

### TECHNICAL FIELD

The present invention relates to an insulating varnish and an insulated wire.

### BACKGROUND

Affected by the high-speed communication represented by 5G and the electrification of automobiles, various insulating materials have begun to be required to have low permittivity characteristics. A transmission loss in the high-speed communication satisfies the following formula: $\text{loss} \propto \text{dielectric loss tangent} \times \sqrt{\text{permittivity}}$. The partial discharge inception voltage of an insulating material is expressed by a formula of PDIV = 163 × √2 × (film thickness/dielectric constant)$^{0.46}$. These parameters are better in materials with a low permittivity.

It is known that the permittivity can be reduced by leaving pores in the insulating material and introducing air. Air has a dielectric constant of about 1.0 and is a medium with the lowest dielectric constant in the world. Therefore, if air is introduced into a resin, the composite dielectric constant will accordingly decrease. However, there are the following three problems: ① the insulation puncture voltage (insulation puncture voltage) drops (by about 100 V/μm). When pores of the air become larger, an electric field is concentrated in the air, and thus there is a problem that the insulation puncture voltage drops. ② The toughness of the insulating material decreases (flexibility decreases). Air itself has no toughness, so the introduction of the air into the insulating material makes it weaker and resembles a sponge which may shred immediately. ③ In order to leave pores in the insulating material, a non-solvent induced phase separation (NIPS) method is generally employed in the prior art. That is, a lean solvent such as water or acetone is used to replace a rich solvent after applying a thermosetting resin varnish, but this method has a more complex process. In view of this, the inventors made a determined effort to develop and find a method capable of solving the above three problems.

### SUMMARY

In a first aspect, the present invention provides an insulating varnish. The insulating varnish includes a base varnish and an ester compound represented by a chemical formula I as a phase separating agent;

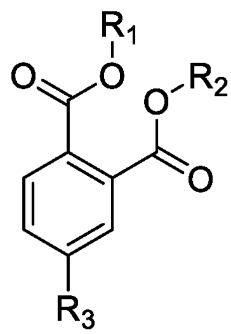

Formula I

wherein $R_1$ and $R_2$ are selected from CmHn, m is selected from any natural number of 1-9, and n is selected from any natural number of 3-19; $R_3$ is selected from one of H, $R_1OCO$, and $R_2OCO$; and $R_1$ being the same as, or different to, R2.

Preferably, n=2m+1 or n=2m-1.

Preferably, the ester compound is 1-50 wt% of the base varnish.

Preferably, the ester compound is selected from at least one of dimethyl phthalate (DMP), diethyl phthalate (DEP), dibutyl phthalate (DBP), diisononyl phthalate (DINP), di-n-octyl phthalate (DOP), dicyclohexyl phthalate (DCHP), diallyl phthalate (DAP), Tributyl TriMellitate (TBT), and trioctyl trimellitate (TOTM).

Preferably, the base varnish includes an insulating resin and a solvent; and preferably, the insulating resin is a thermosetting resin.

Preferably, the base varnish has a solid content of 15-35 wt%.

In a second aspect, the present invention provides an insulated wire. The insulated wire includes a conductor and an insulating sheath covering the conductor, wherein the sheath being prepared by using any one insulating varnish of the

first aspect, the insulating sheath being an insulating resin layer having pores.

Preferably, the pores have an average pore size of 3 μm or less, preferably 1 μm or less.

Preferably, the insulating resin layer has a porosity of 1-60 vol%.

Preferably, an insulation puncture voltage in the vicinity of a film thickness of the insulated wire is 150 V/μm or above, and the insulated wire has a dielectric constant of 2.8 or below.

## DETAILED DESCRIPTION

The present invention is further illustrated by the following embodiments. It should be understood that the following embodiments are only intended to illustrate the present invention, but are not intended to limit the present invention. Unless otherwise specified, each percentage refers to a mass percentage.

The present invention provides an insulating varnish. The insulating varnish includes a base varnish and an ester compound represented by a chemical formula I as a phase separating agent. $R_1$ and $R_2$ are selected from CmHn, m is selected from any natural number of 1-9, and n is selected from any natural number of 3-19; $R_3$ is selected from one of H, $R_1OCO$, and $R_2OCO$; and $R_1$ being the same as, or different to, $R_2$.

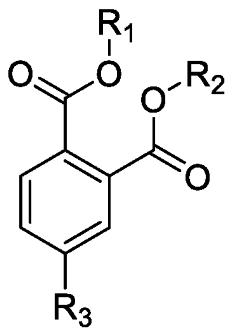

Formula I

In some examples, $R_1$ and $R_2$ are selected from saturated hydrocarbons (alkanes) and $R_3$ is selected from H. Ester compounds having an alkane functional end group that are easy to use can be freely selected according to baking conditions. For example, $R_1$ and $R_2$ are selected from one of methyl, ethyl, butyl, allyl, isobutyl, n-hexyl, 2-ethylhexyl, n-octyl, isononyl, nonyl, isodecyl, and butylbenzyl. In some embodiments, $R_1$ and $R_2$ are methyl and $R_3$ is H.

At this time, the ester compound may use at least one of dimethyl phthalate (DMP), diethyl phthalate (DEP), dibutyl phthalate (DBP), diisononyl phthalate (DINP), and di-n-octyl phthalate (DOP).

In some examples, $R_1$ and $R_2$ are selected from unsaturated hydrocarbons and $R_3$ is selected from H. The unsaturated hydrocarbon may be a linear olefin or cycloalkane. As an example, the ester compound may use at least one of dicyclohexyl phthalate (DCHP), and diallyl phthalate (DAP).

In some examples, $R_1$ and $R_2$ are selected from CmHn, m is selected from any natural number of 1-9, and n is selected from any natural number of 3-19; and $R_3$ is selected from one of $R_1OCO$ and $R_2OCO$. Preferably, $R_1$ and $R_2$ are the same. As an example, the ester compound may use at least one of Tributyl TriMellitate (TBT), and trioctyl trimellitate (TOTM).

The prior art mentions the use of polypropylene glycol as a phase separating agent, which has a completely different chemical structure from that of the phase separating agent used in the present invention. Polypropylene glycol easily causes a pore diameter of an insulating sheath to become larger and thus an insulation puncture voltage becomes lower. The reason is that polypropylene glycol has hydroxyl at its terminal, and the hydroxyl has high molecular compatibility with an insulating resin such as polyimide and thus, the phase separation ability is low. As a result, there is a disadvantage that a dense phase separation structure cannot be made, resulting in an increase in pore diameter, e.g., an average pore size of pores is 4-5 μm or above. In addition, it is necessary to introduce the following complicated operations for making pores: drying a solvent of polyetherimide to which polypropylene glycol is added, and then injecting carbon dioxide under pressure to extract polypropylene glycol. It is presumed that this is because polypropylene glycol cannot be removed through thermal decomposition by heating. If the ester compound of the present invention is used, low-temperature thermal decomposition can be achieved, and thus the ester compound can be easily porosified, which has high advantages. Therefore, the present invention is optimized on the basis of the prior art in terms of the type of phase separating agents, or the pore diameter, or the process complexity.

The use of phase separating agents of the above structure, which differ in the number of carbon atoms, has no significant effect on the porosity of an insulating sheath prepared from the insulating varnish. However, the larger the

number of carbon atoms, for example, when the number of carbon atoms reaches 10 or more, the higher the thermal decomposition temperature and boiling point of the ester compound, and the longer the time when the ester compound remains in the insulating resin, which will lead to an increase in pore size and a corresponding decrease in insulation puncture voltage.

The ester compounds used in the Detailed Description are seen in Table 1.

Table 1

| | |
|---|---|
| DMP | 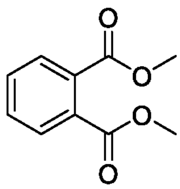 |
| DEP | 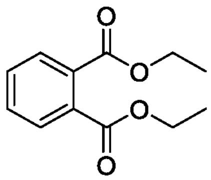 |
| DBP | 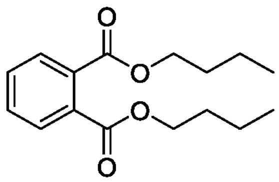 |
| DINP | 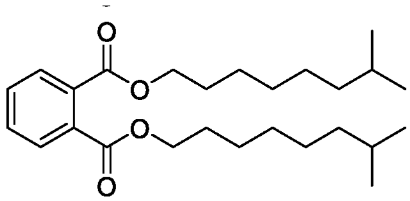 |
| DOP | 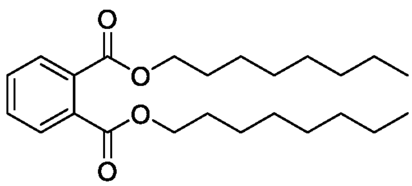 |
| DCHP | 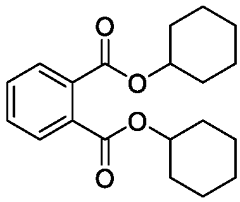 |
| DAP | 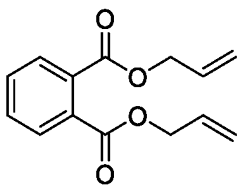 |

(continued)

| | |
|---|---|
| TBT | 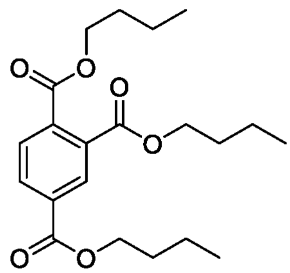 |
| TOTM | 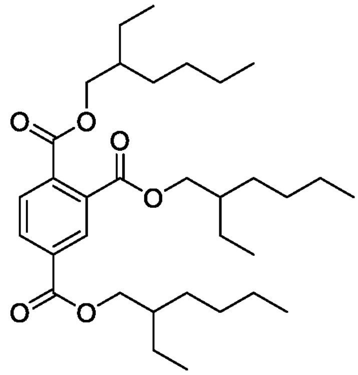 |

When the insulating varnish is in a heating environment, as the solvent starts to volatilize due to heat, the concentration of the insulating resin becomes high, and the resin and the ester compound undergo phase separation to become a form in which a micronized ester compound is dispersed in the resin. Thereafter, the micronized ester compound is immobilized by curing the resin, and then discharged out of the resin by thermal decomposition, thereby forming pores.

The ester compound is 1-50 wt% of the base varnish. If the content of the ester compound is too small, the porosity of the insulating sheath formed by the insulating varnish is reduced, and the effect of low dielectric constant is not obtained. On the contrary, if the content of the ester compound is too high, well mixing of the ester compound with the insulating resin is difficult, the insulating varnish itself becomes cloudy to lose fluidity, or the produced film easily becomes brittle. Preferably, the ester compound is 5-20 wt% of the base varnish.

Thermoplastic resins (super engineering plastics) with strong heat resistance are generally insoluble in solvents to form base varnishes. If a resin material is not easily soluble in solvents, the resin material cannot form a good mixed state with the above ester compound and good compatibility cannot be achieved. Based on this consideration, the insulating resin in the base varnish is preferably a thermosetting resin. The type of the thermosetting resin is not limited, and a thermosetting resin commonly used in the art can be used. In some technical solutions, the thermosetting resin includes, but is not limited to, at least one of polyesterimide, polyamideimide, polyimide, polybenzoxazole, and polybenzimidazole. Polyamideimide (PAI) or polyimide (PI) may be used in the examples.

Taking a polyimide base varnish as an example, the polyimide base varnish includes a polyimide precursor and a solvent. The solvent is not particularly limited and may generally be an organic solvent, for example, at least one selected from N,N-dimethylacetamide, N,N-dimethylformamide, N-methylpyrrolidone, and xylene.

The polyimide precursor includes any polyimide precursor material derived from diamine and dianhydride monomers and capable of being converted into polyimide, such as polyamic acid and the like.

The diamine is preferably an aromatic diamine, for example, phenylenediamine (PPD), diaminodiphenyl ether (ODA), 4,4'-diamino-2,2'-dimethylbiphenyl, 4,4'-diamino-3,3'-dimethylbiphenyl, bis(4-aminophenyl)sulfide, 3,3'-diaminodiphenylsulfone, 1,4-bis(4-aminophenoxy)benzene, 1,3-bis(3-aminophenoxy)benzene, 2,2-bis[4-(4-aminophenoxy)]phenyl]hexafluoropropane, 2,2-bis(4-aminophenyl)hexafluoropropane, 9,9-bis(4-aminophenyl)fluorene, 2,2-bis[4-(4-aminophenoxy)phenyl]propane, 4,4'-bis(4-aminophenoxy)biphenyl, 1,3-bis(4-aminophenoxy)benzene, 2,2'-bis(trifluoromethyl)benzidine, and the like. One of these diamines may be used alone or two or more of these diamines may be mixed to be used.

The dianhydride is preferably an aromatic dianhydride, for example, pyromellitic dianhydride (PMDA), biphenyltetracarboxylic dianhydride (BPDA), 3,3',4,4'-benzophenonetetracarboxylic dianhydride, bicyclo[2.2.2]oct-7-ene-2,3,5,6-tetracarboxylic dianhydride, 1,2,3,4-cyclopentanetetracarboxylic dianhydride, 1,2,3,4-cyclobutanetetracarboxylic dianhydride, 1,2,4,5-cyclohexanetetracarboxylic dianhydride, 3,3',4,4'-diphenylsulfonetetracarboxylic dianhydride, 4,4'-(hexafluoroisopropylidene)diphthalic anhydride, 4,4'-(4,4'-isopropylidenediphenoxy)diphthalic anhydride,

4,4'-oxydiphthalic anhydride, 1,4-phenylene bis(1,3-dioxo-1,3-dihydroisobenzofuran-5-carboxylate), and the like. One of these dianhydrides may be used alone or two or more of these dianhydrides may be mixed to be used.

When the insulating varnish is prepared, the phase separating agent may be uniformly dispersed in the base varnish. A method of uniformly mixing the base varnish with the phase separating agent may be a conventional stirring method, for example, mechanical stirring. The stirring temperature and the stirring time can be selected according to actual needs. For example, the stirring temperature may be 20-40°C and the stirring time may be 1-2 h.

Also provided herein is an insulating sheath (or a "film" or a "skin film") obtained by using the insulating varnish described above. When a wire is manufactured, the insulating varnish coats the surface of a conductor by using a mold that serves as a fixture, and then baked in a baking oven. When it is necessary to prepare a multi-layer insulating sheath, the operation of applying the insulating varnish is repeated for a plurality of times.

An insulated wire in an embodiment of the present invention may be wound into a coil. For example, the insulated wire may be wound on an outer side of a core (for example, a core made of a magnetic material) to form a coil. The coil can be used to manufacture electric motors, such as electric motors for EVs, HEVs, etc.

According to the existing electrical insulating resin sheets for motors, by using phase separating agents such as polyethylene glycol and polypropylene glycol, a porous resin layer is manufactured by the following process: coating a substrate with a thermoplastic resin composition including a thermoplastic resin, and a phase separating agent that is phase-separated from a curing agent of the thermoplastic resin, and drying or curing the thermoplastic resin composition to manufacture a thermoplastic resin sheet having a microphase separation structure; and removing the phase separating agent from the thermoplastic resin sheet. It is often necessary to remove the phase separating agent by means of solvent extraction or the like. For example, one solvent of liquid carbon dioxide, subcritical carbon dioxide or supercritical carbon dioxide is used. In the present invention, a phase separating agent of a suitable structure is selected, such as a phthalate, which can be thermally decomposed at a low temperature, so there is no need for the "cumbersome operation of injecting carbon dioxide under pressure to extract the phase separating agent", i.e., the phase separating agent can be easily porosified only by heating. The present invention requires only a very simple method of adding the phase separating agent to the varnish and then sintering, so that an insulated wire having a low dielectric constant (permittivity), a high insulation puncture voltage, and excellent toughness can be obtained.

When the average pore size of the pores in the insulating resin layer is too high, the relative dielectric constant of the wire cannot be effectively reduced, resulting in a decrease in the insulating properties and mechanical strength of the wire. That is, maintaining a pore layer with a higher insulation puncture voltage is critical. An insulation puncture voltage in the vicinity of a film thickness of the insulated wire of the present invention is 150 V/$\mu$m or above, and the insulated wire has a dielectric constant of 2.8 or below. In some technical solutions, when the wire is manufactured, there may be situations where a multi-layer structure is used. For example, a lower layer is in the form of a pore-free layer and an upper layer is in the form of a pore-containing layer, so that the insulation puncture voltage will rise. The wire of the present invention includes a conductor and an insulating sheath covering the conductor and prepared by using the insulating varnish, the insulating sheath being an insulating resin layer having pores having an average pore size of 3 $\mu$m or less, preferably 1 $\mu$m or less, so that the insulation puncture voltage in the vicinity of the film thickness of the wire can be controlled to be 150 V/$\mu$m or above.

Examples are further illustrated below to illustrate the present invention in detail. It should also be understood that the following examples are only for further explanation of the present invention and cannot be understood as limiting the scope of protection of the present invention, and that some non-essential improvements and adjustments made by those skilled in the art according to the above contents of the present invention fall within the scope of protection of the present invention. The specific process parameters and the like in the following examples are only one example of a suitable range, that is, those skilled in the art can make selections within the suitable range through the description herein, rather than being limited to the specific numerical values in the following examples.

A base varnish Ulmide-D28 (a polyimide varnish manufactured by Sumii Industry, having a weight-average molecular weight of 36000, and a solid content of 26-28 wt%), a base varnish Ulmide-AI32 (a polyamideimide varnish manufactured by Sumii Industry, having a weight-average molecular weight of 8000-30000, and a solid content of 30-34 wt%), TetEG (Tetraethylene glycol dimethyl ether), TriEG (Triethylene glycol dimethyl ether), and PMMA (poly(methyl methacrylate)) in the following examples were commercially purchased.

Example 1

An insulated wire was manufactured.

A phase separating agent DMP for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was

350°C and the outlet temperature of the heating furnace was 450°C to obtain the insulated wire. The insulating layer was a single layer with an average thickness as shown in Table 4.

Example 2

An insulated wire was manufactured.

A phase separating agent DEP for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 3

An insulated wire was manufactured.

A phase separating agent DBP for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 4

A phase separating agent DINP for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 5

A phase separating agent DOP for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 6

A phase separating agent DCHP for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 7

A phase separating agent DAP for pore formation was added into a base varnish, and stirred and mixed to be

uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 8

A phase separating agent TBT for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Example 9

A phase separating agent TET for pore formation was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 4.

Comparative examples 1-4

An additive for pore formation (a pore forming agent) was added into a base varnish, and stirred and mixed to be uniform to prepare a varnish for formation of an insulating layer. A varnished wire was manufactured by using the above varnish. Specifically, by casting, stretching, wire drawing and softening copper, an electrical conductor having a circular cross section and an average diameter of 1 mm was obtained. The prepared varnish for formation of the insulating layer coated an outer circumferential surface of the electrical conductor, and baked under the conditions that the inlet temperature of a heating furnace was 350°C and the outlet temperature of the heating furnace was 450°C to obtain the insulated wire. The prepared wire was immersed in an acetone solvent for 24 hours, thereby extracting the residual phase separating agent, and then dried at 60°C for 24 hours to prepare a wire containing pores. The insulating layer was a single layer with an average thickness as shown in Table 2.

Comparative examples 5-6

An additive for pore formation (a thermal decomposition agent) was added into a base varnish, and stirred and mixed to be uniform to prepare a varnish. A varnished wire was manufactured by using the above varnish. Specifically, by casting, stretching, wire drawing and softening copper, an electrical conductor having a circular cross section and an average diameter of 1 mm was obtained. The prepared varnish for formation of an insulating layer coated an outer circumferential surface of the electrical conductor, and baked under the conditions that the inlet temperature of a heating furnace was 350°C and the outlet temperature of the heating furnace was 450°C to obtain the insulated wire. The insulating layer was a single layer with an average thickness as shown in Table 2.

Performance testing

Average pore size of pores: SEM of a film cross section was observed and representative 10 pore diameters were determined and averaged.

Relative permittivity (relative dielectric constant): the electrostatic capacity of the insulated wire was measured, and the relative permittivity was calculated based on the electrostatic capacity and the thickness of the insulating layer containing pores. When the electrostatic capacity was measured, an LCR (high) tester (HIOKI, model: 3532-50) was used.

A calculation formula is $C = \varepsilon_0 \varepsilon_s \frac{S}{L}$. In this formula, C is the electrostatic capacitance, εo is a dielectric constant of vacuum, εs is a relative dielectric constant, S is an area of a plate, and L is a distance of the plate.

Porosity: the density of the insulated wire (a specific gravity, ρf) and the density of the wire before making pores (a specific gravity, ρs) were measured by a water displacement method according to the Archimedes' principle, and the porosity was calculated according to ρf/ρs. Porosity (%)=[1-(ρf/ρs)]×100.

The double twist (insulation) puncture voltage was tested according to IS C3216-5 4.4.

The double twist (insulation) puncture voltage is divided by 2 times the film thickness to obtain the insulation puncture voltage in the vicinity of the film thickness.

Flexibility is an indicator of the toughness of the sheath. A flexibility test was evaluated based on JIS C3216-3 2011 5.1.1. 1d denotes the diameter of the wire itself. For example, in the case of a wire having a diameter of 1.0 mm, it is recorded as 1d when the wire is wound on a rod having a diameter of 1.0 mm without cracking. 2d is 2.0 mm. If the wire cracks at 1d and does not crack at 2d, then it is recorded as 2d.

Table 2

| | Comparative example 1 | Comparative example 2 | Comparative example 3 | Comparative example 4 | Comparative example 5 | Comparative example 6 |
|---|---|---|---|---|---|---|
| Method | Pore forming agent | Pore forming agent | Pore forming agent | Pore forming agent | Thermal decomposition | Thermal decomposition |
| Additive for pore formation | TetEG | TriEG | TetEG | TetEG | PMMA | PMMA |
| | TriEG | | TriEG | | | |
| Base varnish | AI | AI | PI | PI | AI | PI |
| Film thickness (μm) | 35 | 35 | 35 | 35 | 35 | 35 |
| Average pore size of pores (μm) | 7.5 | 7.5 | 7.2 | 7.4 | 6.5 | 7.0 |
| Relative permittivity | 2.8 | 2.8 | 2.4 | 2.5 | 2.8 | 2.4 |
| Porosity | 20% | 20% | 27% | 25% | 20% | 26% |
| Double twist | 5.4 | 5.2 | 5.5 | 5.3 | 7.1 | 6.1 |
| puncture voltage (kV) | | | | | | |
| Insulation puncture voltage in the vicinity of a film thickness (V/μm) | 77.1 | 74.3 | 78.6 | 75.7 | 101.4 | 87.1 |
| Flexibility | No elongation 2d_OK | No elongation 2d_OK | No elongation 1d_OK | No elongation 1d_OK | 10% Elongation 1d_OK | 10% Elongation 1d_OK |

Table 3 Unit: parts by weight

| | | Comparative example 1 | Comparative example 2 | Comparative example 3 | Comparative example 4 | Comparative example 5 | Comparative example 6 | Example 1 | Example 2 | Example 3 | Example 4 | Example 5 |
|---|---|---|---|---|---|---|---|---|---|---|---|---|
| Base varnish | Ulmide-D28 | | | 100 | 100 | | 100 | 100 | 100 | 100 | 100 | 100 |
| | Ulmide-AI32 | 100 | 100 | | | 100 | | | | | | |
| Pore forming agent | TetEG | 5 | | 5 | 5 | | | | | | | |
| | TriEG | 5 | 10 | 5 | | | | | | | | |
| | PMMA | | | | | 30 | 25 | | | | | |
| | DMP | | | | | | | 10 | | | | |
| | DEP | | | | | | | | 10 | | | |
| | DBP | | | | | | | | | 10 | | |
| | DINP | | | | | | | | | | 10 | |
| | DOP | | | | | | | | | | | 10 |

Table 4

| | Example 1 | Example 2 | Example 3 | Example 4 | Example 5 | Example 6 | Example 7 | Example 8 | Example 9 |
|---|---|---|---|---|---|---|---|---|---|
| Method | Phase separation | Phase separation | Phase separation | Phase separation | Phase separation | Phase separation | Phase separation | Phase separation | Phase separation |
| Additive for pore formation | DMP | DEP | DBP | DINP | DOP | DCHP | DAP | TBT | TET |
| Base varnish | PI | PI | PI | PI | PI | PI | PI | PI | PI |
| Film thickness (μm) | 35 | 35 | 35 | 35 | 35 | 35 | 35 | 35 | 35 |
| Average pore size of pores (μm) | 0.4 | 0.45 | 0.3 | 0.8 | 0.9 | 0.6 | 0.45 | 0.9 | 0.8 |
| Relative permittivity | 2.4 | 2.4 | 2.4 | 2.4 | 2.4 | 2.4 | 2.4 | 2.4 | 2.4 |
| Porosity | 28% | 28% | 27% | 27% | 27% | 27% | 27% | 27% | 27% |
| Double twist puncture | 15.2 | 14.5 | 15.7 | 12.7 | 10.9 | 13 | 14.3 | 10.9 | 11.3 |
| voltage (kV) | | | | | | | | | |
| Insulation puncture voltage in the vicinity of a film thickness (V/μm) | 217.1 | 207.1 | 224.3 | 181.4 | 155.7 | 185.7 | 204.3 | 155.7 | 161.4 |
| Flexibility | 30% Elongation 1d_OK | 30% Elongation 1d_OK | 30% Elongation 1d_OK | 30% Elongation 1d_OK | 30% Elongation 1d_OK | 30% Elongation 1d_OK | 30% Elongation 1d_OK | 30% Elongation 1d_OK | 30% Elongation 1d_OK |

The pore forming agent in Comparative examples 1-4 has low phase separation ability, and therefore acts simply as a poor solvent. Therefore, a dense phase separation structure cannot be constructed, and the diameter of the pores made becomes very large. In addition, since the phase separation ability is low (i.e., the affinity with the polyimide or polyamideimide resin is high), there is a problem that a large amount of the phase separating agents remain in the sheath after heating, and the phase separating agent cannot be completely porosified only by heating. The additive for pore formation in Comparative examples 5-6 acts as a thermal decomposition resin, and after the insulating sheath formed from the varnish is cured, the pores are formed by decomposition and vaporization of the thermal decomposition resin. There are also problems that the pore size is large and the insulation puncture voltage in the vicinity of the film thickness is low.

In Comparative examples 1-6, pores with an average pore size of 6.5 μm or more were formed. Compared with this, pores with an average pore size of 1 μm or less are formed in the present invention . Due to such fine pores, a random electric field is not concentrated, the insulation puncture voltage is increased, and the toughness of the sheath is not affected. The use of the phase separating agent of the present invention can make up for all the disadvantages of ① to ③ mentioned in the background. As described above, it can be seen that the wire in the examples of the present invention has a permittivity of 2.8 or below but has a very high insulation puncture voltage (150 V/μm or above) in the vicinity of the film thickness and good flexibility. The method of the present invention is a very simple method that requires only adding the phase separating agent to the varnish and then sintering, and an insulating material having a low permittivity, a high insulating puncture voltage, and excellent toughness can be obtained.

Moreover, in Comparative examples 1-4, it is necessary to immerse the prepared wire in the acetone solvent, thereby extracting the residual phase separating agent, followed by drying to prepare the wire having pores. The phase separating agent compound with a special structure used in the present invention is excellent in phase separation ability, and therefore can be rapidly removed from the sheath only by heating due to thermal decomposition at a low temperature in addition to being capable of forming the dense phase separation structure.

## Claims

1. An insulating varnish, **characterized by** comprising a base varnish and an ester compound represented by a chemical formula I as a phase separating agent;

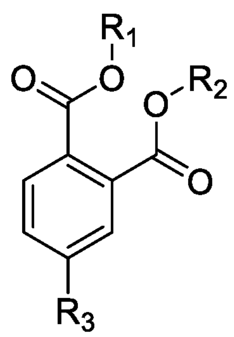

Formula I

wherein $R_1$ and $R_2$ are selected from CmHn, m is selected from any natural number of 1-9, and n is selected from any natural number of 3-19; $R_3$ is selected from one of H, $R_1OCO$, and $R_2OCO$; and $R_1$ being the same as, or different to, $R_2$.

2. The insulating varnish according to claim 1, **characterized in that** n=2m+1 or n=2m-1.

3. The insulating varnish according to claim 1 or 2, **characterized in that** the ester compound is 1-50 wt% of the base varnish.

4. The insulating varnish according to any one of claims 1 to 3, **characterized in that** the ester compound is selected from at least one of dimethyl phthalate (DMP), diethyl phthalate (DEP), dibutyl phthalate (DBP), diisononyl phthalate (DINP), di-n-octyl phthalate (DOP), dicyclohexyl phthalate (DCHP), diallyl phthalate (DAP), Tributyl TriMellitate (TBT), and trioctyl trimellitate (TOTM).

5. The insulating varnish according to any one of claims 1 to 4, **characterized in that** the base varnish comprises an

insulating resin and a solvent; and preferably, the insulating resin is a thermosetting resin.

6. The insulating varnish according to any one of claims 1 to 5, **characterized in that** the base varnish has a solid content of 15-35 wt%.

7. An insulated wire, **characterized by** comprising a conductor and an insulating sheath covering the conductor, wherein the insulating sheath being prepared by using the insulating varnish according to any one of claims 1 to 6, the insulating sheath being an insulating resin layer having pores.

8. The insulated wire according to claim 7, **characterized in that** the pores have an average pore size of 3 μm or less, preferably 1 μm or less.

9. The insulated wire according to claim 7 or 8, **characterized in that** the insulating resin layer has a porosity of 1-60 vol%.

10. The insulated wire according to any one of claims 7 to 9, **characterized in that** an insulation puncture voltage in the vicinity of a film thickness of the insulated wire is 150 V/μm or above, and the insulated wire has a dielectric constant of 2.8 or below.

## INTERNATIONAL SEARCH REPORT

International application No.
**PCT/CN2022/100651**

**A. CLASSIFICATION OF SUBJECT MATTER**

H01B 7/02(2006.01)i; H01B 13/14(2006.01)i; H01B 13/00(2006.01)i; C09D 5/00(2006.01)i; C09D 177/00(2006.01)i; C08J 9/26(2006.01)i; C08J 9/28(2006.01)i

According to International Patent Classification (IPC) or to both national classification and IPC

**B. FIELDS SEARCHED**

Minimum documentation searched (classification system followed by classification symbols)

H01B C09D C08J

Documentation searched other than minimum documentation to the extent that such documents are included in the fields searched

Electronic data base consulted during the international search (name of data base and, where practicable, search terms used)

CNPAT; VEN; CNKI: 绝缘, 清漆, 介电, 孔, 相分离剂, 酯, 邻苯二甲酸, 偏苯三酸, 无机, 填料, 电线, insulate, vanish, paint, dielectric, hole, aperture, phase, separate, ester, phthalete, trimellitate, inorganic, filler, wire

**C. DOCUMENTS CONSIDERED TO BE RELEVANT**

| Category* | Citation of document, with indication, where appropriate, of the relevant passages | Relevant to claim No. |
|---|---|---|
| Y | CN 110800069 A (SUMITOMO ELECTRIC INDUSTRIES, LTD. et al.) 14 February 2020 (2020-02-14)<br>description, paragraphs [0007]-[0134] | 1-10 |
| Y | CN 110256717 A (XI'AN JIAOTONG UNIVERSITY) 20 September 2019 (2019-09-20)<br>description, paragraphs [0005]-[0024] | 1-10 |
| Y | CN 101665580 A (BYD CO., LTD.) 10 March 2010 (2010-03-10)<br>description, page 3, line 2 to page 11, line 24 | 1-10 |
| Y | CN 105778130 A (NORTHWESTERN POLYTECHNIC UNIVERSITY) 20 July 2016 (2016-07-20)<br>description, paragraphs [0007]-[0032] | 1-10 |
| Y | CN 102085457 A (MEMSTAR TECHNOLOGY LTD.) 08 June 2011 (2011-06-08)<br>description, paragraphs [0007]-[0058] | 1-10 |
| A | JP 2017016840 A (SUMITOMO ELECTRIC INDUSTRIES, LTD. et al.) 19 January 2017 (2017-01-19)<br>entire document | 1-10 |

☐ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 December 2022** | **09 January 2023** |

Name and mailing address of the ISA/CN

**China National Intellectual Property Administration (ISA/CN)**
**No. 6, Xitucheng Road, Jimenqiao, Haidian District, Beijing 100088, China**

Facsimile No. **(86-10)62019451**

Authorized officer

Telephone No.

Form PCT/ISA/210 (second sheet) (January 2015)

**INTERNATIONAL SEARCH REPORT**
**Information on patent family members**

International application No.
**PCT/CN2022/100651**

| Patent document cited in search report | | | Publication date (day/month/year) | Patent family member(s) | | | Publication date (day/month/year) |
|---|---|---|---|---|---|---|---|
| CN | 110800069 | A | 14 February 2020 | WO | 2018230706 | A1 | 20 December 2018 |
| | | | | EP | 3640955 | A1 | 22 April 2020 |
| | | | | JP | WO2018230706 | A1 | 16 April 2020 |
| | | | | US | 2020135360 | A1 | 30 April 2020 |
| CN | 110256717 | A | 20 September 2019 | | None | | |
| CN | 101665580 | A | 10 March 2010 | | None | | |
| CN | 105778130 | A | 20 July 2016 | | None | | |
| CN | 102085457 | A | 08 June 2011 | WO | 2011069441 | A1 | 16 June 2011 |
| | | | | US | 2012085698 | A1 | 12 April 2012 |
| JP | 2017016840 | A | 19 January 2017 | | None | | |

Form PCT/ISA/210 (patent family annex) (January 2015)